# EUROPÄISCHE PATENTSCHRIFT

(11) **EP 1 202 016 B1**
(45) Veröffentlichungstag und Bekanntmachung des Hinweises auf die Patenterteilung: **17.01.2007**
(21) Anmeldenummer: 01124090.0
(22) Anmeldetag: 10.10.2001
(51) Int. Cl.: F28D 7/10, F28F 1/16

(54) **Klimaanlage mit innerem Wärmetauscher und Wärmetauscherrohr für einen solchen**
Air-conditioning system with internal heat exchanger and heat exchanger tube for same
Installation de climatisation avec échangeur de chaleur interne et tube d'échangeur de chaleur pour une telle installation

(30) Priorität: 25.10.2000 DE 10053000
(43) Veröffentlichungstag der Anmeldung: 02.05.2002
(73) Patentinhaber: Eaton Fluid Power GmbH, 76532 Baden-Baden (DE)
(72) Erfinder: Ullrich, Holger, 76437 Rastatt (DE); Leisenheimer, Bert, Dr., 76185 Karlsruhe (DE)
(74) Vertreter: Rüger, Barthelt & Abel Patentanwälte

(56) Entgegenhaltungen:
- DE-A- 19 903 833
- DE-A- 19 944 951
- GB-A- 1 032 990

## Beschreibung

Die Erfindung betrifft ein Wärmetauscherrohr, einen mit einem solchen Wärmetauscherrohr aufgebauten Wärmetauscher sowie eine Klimaanlage mit einem solchen Wärmetauscher.

Klimaanlagen, insbesondere Klimaanlagen von Kraftfahrzeugen, beinhalten in der Regel eine Kältemaschine, die nach dem Kompressionsprinzip arbeitet. Die Hauptkomponenten einer solchen Kompressions-Kältemaschine sind ein Verdichter (Kompressor), ein Kühler (oder Kondensator), ein Expansionsventil, ein Verdampfer und ein innerer Wärmetauscher zur Abkühlung des als Kältemittel zum Expansionsventil geleiteten Fluids und zum Erwärmen des aus dem Verdampfer kommenden entspannten Kältemittels im Gegenstrom.

Als Alternative zu herkömmlichen Kältemitteln werden seit einiger Zeit Fluide vorgeschlagen, die einen höheren Betriebsdruck erfordern. Ein solches Fluid ist bspw. CO₂. Derartige Kältemittel erfordern einen erhöhten Anlagendruck, wobei die Anlagen aus Sicherheitsgründen bis zu Berstdrücken von 700 bar ausgelegt werden müssen.

Der Betrieb einer Kältemaschine mit hohem Betriebsdruck von über 60 bar unterliegt in Kraftfahrzeugen besonderen Sicherheitsanforderungen. Diese können nicht ohne Weiteres lediglich durch eine Verstärkung herkömmlicher Komponenten einer Klimaanlage erfüllt werden, um nicht das Anlagengewicht zu hoch werden zu lassen. Für Kraftfahrzeuge vorgesehene Klimaanlagen und Kältemaschinen müssen möglichst leicht sein. Darüber hinaus müssen sie so beschaffen sein, dass sich eine möglichst kostengünstige und prozesssichere Fertigung ergibt. Diese allgemeinen Forderungen treffen auch auf den inneren Wärmetauscher einer Kraftfahrzeug-Klimaanlage zu. Ein solcher Wärmetauscher weist zwei in Wärmeaustausch miteinander stehende Kanäle auf. Zusätzlich zu den genannten Schwierigkeiten ergibt sich hier die Problematik, dass die Kanäle nicht nur von unterschiedlich warmen Medien durchströmt werden, sondern auch unterschiedlichen Drücken ausgesetzt sind. Die Druckunterschiede zwischen beiden Kanälen sind bei Hochdruck-Kältemaschinen erheblich. Dennoch dürfen die Drücke nicht zur Beschädigung des Wärmetauschers führen. Darüber hinaus ist ein möglichst guter Wärmeaustausch sicherzustellen. Dies kann eine besondere Schwierigkeit darstellen, wenn überkritische Drücke erreicht werden, bei denen zwischen flüssiger und gasförmiger Phase des Kältemittels nicht mehr zu unterscheiden ist. Auch bei solchen Betriebszuständen muss ein gewünschter Wärmeaustausch zwischen beiden Kanälen sichergestellt sein.

Ein für Freon - d.h. ein herkömmliches Kältemittel geeignetes Wärmetauscherrohr ist aus der GB-B-1 032 990 zu entnehmen. Das Wärmetauscherrohr weist ein zentrales Rohr mit nach innen ragenden Rippen und auf einem Kranz um diesen herum gruppierte Kanäle auf, die voneinander durch radial orientierte Wände getrennt sind. Außen ist das Wärmetauscherrohr durch einen zylindrischen Mantel abgeschlossen.

Des weiteren offenbart die DE-A-199 03 833 einen Wärmetauscher mit einem Wärmetauscherrohr, das einen Zentralkanal und um diesen herum angeordnete Außenkanäle aufweist. Das Wärmetauscherrohr ist als Rohrschlange in einem Behälter angeordnet. Während der Zentralkanal als Rohr in den Behälter hineinführt und aus diesem herausgeführt ist, sind die Außenkanäle innerhalb des Behälters offen, um einen Fluidzustrom und einen Fluidabstrom zu ermöglichen.

Es ist Aufgabe der Erfindung, einen für Hochdruck-Kältemaschinen geeigneten Wärmetauscher sowie eine Klimaanlage mit einem solchen Wärmetauscher zu schaffen.

Diese Aufgabe wird durch einen Wärmetauscher mit den Merkmalen des Patentanspruchs 1 gelöst.

Der erfindungsgemäße Wärmetauscher enthält ein Wärmetauscherrohr, das ein Mehrkammer-Profil mit einem Zentralkanal und mit mehreren um den Zentralkanal herum gruppierten Außenkanälen festlegt. Dabei ist der Zentralkanal vorzugsweise mittig (zentral) in dem Wärmetauscherrohr angeordnet, d.h. die Mittellinie des Zentralkanals stimmt mit der Mittellinie des Wärmetauscherrohrs überein. Die Außenkanäle sind konzentrisch zu dem Zentralkanal angeordnet und voneinander durch Zwischenwände getrennt. Die Zwischenwände erstrecken sich somit etwa in Radialrichtung bezüglich des Zentralkanals bzw. seiner Mittellinie. Sie wirken somit aussteifend für das Wärmetauscherrohr und gestatten es, den Zentralkanal besonders druckfest auszulegen. Bei einem Kanaldurchmesser von etwa 5mm werden schon bei geringen sonstigen Wandstärken des Wärmetauscherrohrs von bspw. 1mm bis 2mm und Aluminium als Werkstoff Druckfestigkeiten von mehreren 100 bar erreicht.

Der Zentralkanal weist vorzugsweise eine von der Zylinderform abweichende Form auf. Es sind an der Wandung des Zentralkanals Vorsprünge angeformt, die sich in den Zentralkanal hinein erstrecken. Die Vorsprünge bewirken trotz der von ihnen verursachten Verengung des Zentralkanals und der damit einhergehenden Erhöhung der Strömungsgeschwindigkeit auf z.B. 15m/s eine Verbesserung des Wärmeaustauschs zwischen dem Zentralkanal und den Außenkanälen.

Die Querschnittsfläche des Zentralkanals ist bei der bevorzugten Ausführungsform des Wärmetauscherrohrs deutlich kleiner als die Summe der Querschnittsflächen der Außenkanäle. Außerdem ist die Summe der Wandungsfläche der Außenkanäle wesentlich höher als die Wandungsfläche des Zentralkanals. Dennoch ergibt sich ein sehr guter Übergang zwischen dem Kältemittelfluid in dem Zentralkanal und dem Fluid in den Außenkanälen. Dies insbesondere, wenn das Fluid in dem Zentralkanal flüssig oder in einem überkritischen Zustand ist, während das Fluid in den Außenkanälen gasförmig ist.

Es hat sich als zweckmäßig herausgestellt, wenn die Anzahl der Zwischenwände, die die Außenkanäle voneinander trennen, größer ist, als die Anzahl der Vorsprünge, die in den Zentralkanal ragen. Damit ergibt sich eine besonders hohe Stabilität des Wärmetauscherrohrs und eine hohe Druckfestigkeit. Andererseits ergibt sich ein guter Wärmeaustausch zwischen dem Zentralkanal und den Außenkanälen. Vorzugsweise beträgt der Winkel den benachbarte Zwischenwände, die zwischeneinander einen Außenkanal einschließen, etwa 30°, d.h. es sind 12 Außenkanäle vorgesehen. Hier sind jedoch Abweichungen möglich. Bedarfsweise können auch etwas weniger oder noch mehr Außenkanäle vorgesehen werden. Die Außenkanäle sind vorzugsweise keilförmig ausgebildet, d.h. die Zwischenwände sind parallelflankig. Mit anderen Worten, ihre Dicke ist in Radialrichtung unverändert, während der Querschnitt der Außenkanäle von innen nach außen hin zunimmt. Die gleichmäßige Wandstärke der Zwischenwände optimiert die Druckfestigkeit des Wärmetauscherrohrs. Die Druckfestigkeit wird außerdem durch die große Anzahl von Zwischenwänden erhalten, die sich strahlenartig von dem Zentralkanal wegerstrecken. Sie steifen diesen aus.

Die Außenkanäle sind in Umfangsrichtung gemessen vorzugsweise schmaler als in Radialrichtung gemessen. Auch dies dient der Aussteifung des Profils bei gleichzeitiger Verbesserung des Wärmeaustauschs.

Die Außenkanäle weisen vorzugsweise einheitliche Querschnitte auf. Dadurch wird erreicht, dass eine Druckbeaufschlagung des Zentralkanals und/oder der Außenkanäle nicht zu einer asymmetrischen Belastung des Wärmetauscherrohrs führen. Es ist jedoch auch möglich, Außenkanäle mit unterschiedlichen Querschnitten zu versehen. Dies insbesondere, um bspw. den Wärmeübergang im Bereich der Vorsprünge des Zentralkanals noch zu erhöhen.

Der Zentralkanal weist einen von der Kreisform abweichenden Querschnitt auf. Durch diese Maßnahme wird eine Verbesserung des Wärmeübergangs, insbesondere bei sehr engen Kanalquerschnitten ermöglicht. Enge Kanalquerschnitte ermöglichen eine große Druckfestigkeit schon bei geringen Wandstärken und somit eine besonders gewichtsparende Bauweise. Damit ist das Wärmetauscherrohr zum Aufbau eines Wärmetauschers für eine Hochdruck-Kältemaschine einer Klimaanlage eines Kraftfahrzeugs geeignet.

Der Zentralkanal kann bspw. durch vier einander jeweils paarweise gegenüberstehende Vorsprünge verengt sein. Er weist dann einen kreuzförmigen Querschnitt auf, was sich als zweckmäßig herausgestellt hat. Die Vorsprünge sind dann im Querschnitt ungefähr dreieckig, wobei sie an ihrer dem Zentrum des Kanals zugewandten Seite vorzugsweise gerundet sind. Der Rundungsradius ist vorzugsweise relativ groß gewählt und liegt etwa im Bereich der Höhe jedes Vorsprungs. Die Vorsprünge sind somit zu dem Innenraum des Zentralkanals hin etwa kreisbogenförmig begrenzt.

Die Vorsprünge sind vorzugsweise als Rippen ausgebildet, die sich in Axialrichtung, d.h. ohne Verwindung entlang des Zentralkanals erstrecken. Sie sind somit gerade ausgebildet. Die Rippen gestatten gegenüber einem Wärmetauscherrohr mit glattem Zentralkanal eine Verkürzung des Wärmetauscherrohrs um ca. 30%.

Das derart gestaltete Wärmetauscherrohr lässt sich als Aluminium-Strangpressprofil ausbilden. Trotz im Strangpressprofil vorhandener Schweißlinien, bei denen das Material des Strangpressprofils zusammengeflossen ist, lässt sich ohne Schwierigkeiten die gewünschte Druckfestigkeit erreichen. Als Material kann AlMgSiO.5 F22 dienen.

Ein Wärmetauscher, der das Wärmetauscherrohr enthält, ist insbesondere für den Einsatz als innerer Wärmetauscher bei Hochdruck-Kältemaschinen für Klimaanlagen von Kraftfahrzeugen geeignet. Das Wärmetauscherrohr kann dabei sowohl in gestreckter Form, als auch U-förmig gebogen, als auch in anderweitig gebogener, bspw. spiralförmig oder schraubenförmig gewundener Form, als Wärmetauscher eingesetzt werden. Das symmetrische Profil und die aussteifenden zahlreichen Zwischenwände bewirken, dass weder Druckänderungen noch Temperaturänderungen zu nennenswerten Verformungen eines solchen Wärmetauschers führen. Das Ein- und Ausleiten der Fluide in den Zentralkanal und in die Außenkanäle bzw. aus diesen heraus, erfolgt mit entsprechenden Anschlussstücken, die das ankommende Fluid auf die Außenkanäle aufteilen und das aus den Außenkanälen austretende Fluid wieder zusammenfassen. Außerdem führen die Anschlussstücke den Zentralkanal separat Fluid zu und leiten es aus diesem separat wieder heraus.

Erfindungsgemäß sind die Anschlussstücke sind mit einem Mittel versehen, das dazu dient, das für die Außenkanäle vorgesehene Fluid gleichmäßig auf die Außenkanäle aufzuteilen bzw. gleichmäßig aus diesem wieder abzunehmen. Dazu kann eine konische Vorkammer mit ein, zwei oder mehreren Zuführungsbohrungen (Manifold) dienen. Alternativ kann eine Drallkammer vorgesehen werden, die drallerzeugende Mittel enthält, so dass das den Außenkanälen zugeführte Fluid eine Rotationsbewegung um die Längsachse des Wärmetauscherrohrs ausführt. Es lassen sich sehr geringe Druckverluste Δp von 2 bar und weniger realisieren.

Es werden Ausführungsformen bevorzugt, bei denen die Anschlussstücke an beiden Enden des Wärmetauscherrohrs untereinander gleich ausgebildet sind. Dies hat fertigungstechnische Vorteile.

Bei einer entsprechenden Klimaanlage wird der erfindungsgemäße Wärmetauscher vorzugsweise als innerer Wärmetauscher verwendet, wobei er einen Wärmeaustausch zwischen dem in den Verdampfer eintretenden Fluid und dem aus dem Wärmetauscher herauskommenden Fluid bewirken soll. Dies vorzugsweise im Gegenstrom. Dabei führt der Zentralkanal vorzugsweise das dem Expansionsventil unter hohem Druck zugeführte flüssige oder im überkritischen Zustand befindliche Fluid, während die Außenkanäle vorzugsweise das gasförmige, mit niedrigerem Druck aus dem Verdampfer austretende Fluid führen. Der Zentralkanal kann bei dem erfindungsgemäßen Grunddesign, zu dem ein profilierter Zentralkanal gehört, ohne Weiteres besonders druckfest ausgeführt werden. Dies gilt insbesondere, wenn, wie von der Erfindung ebenfalls vorgesehen, im Bereich der Außenkanäle mehr als sechs Zwischenwände vorgesehen werden, die außer einer verbesserten Wärmeübertragung auch eine verbesserte Aussteifung des Wärmetauscherrohrs und somit eine erhöhte Druckfestigkeit des Zentralkanals bewirken. Auch kann der Außendurchmesser gegenüber Wärmetauscherrohren mit lediglich sechs Außenkanälen reduziert werden, was Vorteile hinsichtlich Gewicht und Druckfestigkeit hat.

Vorteilhafte Einzelheiten der Erfindung sind aus der Zeichnung, der Beschreibung oder Unteransprüchen entnehmbar.

In der Zeichnung sind Ausführungsbeispiele der Erfindung veranschaulicht. Es zeigen:
Fig. 1 eine Kraftfahrzeug-Klimaanlage in schematischer Prinzipdarstellung,
Fig. 2 einen inneren Wärmetauscher der Kraftfahrzeug-Klimaanlage nach Figur 1, in Seitenansicht,
Fig. 3 ein für den Wärmetauscher nach Figur 2 vorgesehenes Wärmetauscherrohr, in einer perspektivischen Schnittdarstellung,
Fig. 4 den Wärmetauscher nach Figur 2, in einer ausschnittsweisen und teilweise aufgeschnittenen Darstellung,
Fig. 5 den Wärmetauscher nach Figur 2, geschnitten entlang einer Linie V-V in Figur 4,
Fig. 6 eine alternative Ausführungsform eines Wärmetauschers mit Drallkammer-Anschlussstücken, in ausschnittsweiser und teilweise geschnittener Darstellung,
Fig. 7 den Wärmetauscher nach Figur 6, geschnitten entlang der Linie VII-VII in Figur 6, und
Fig. 8 eine alternative Ausführungsform eines Wärmetauscherrohrs, in schematisierter Schnittdarstellung, und
Fig. 9 eine alternative Ausführungsform eines Wärmetauschers mit angepresstem Anschlussstücken, in ausschnittsweiser und teilweise geschnittener Darstellung.

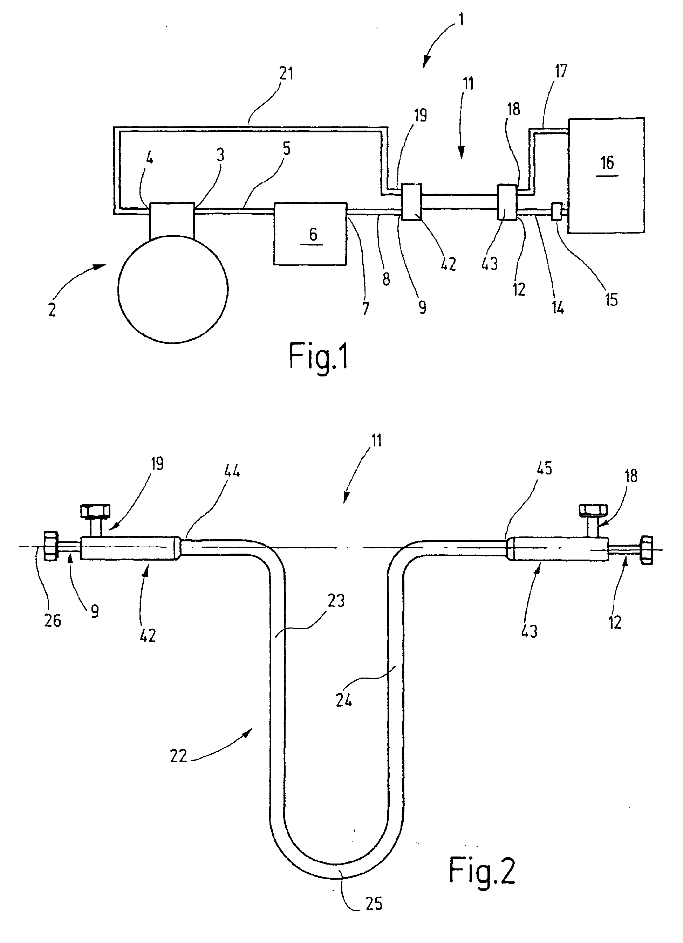

In Figur 1 ist eine Kältmaschine 1 für Kraftfahrzeuge veranschaulicht. Zu der Kältemaschine 1 gehört ein Kompressor 2, der bspw. von dem Motor des Kraftfahrzeugs angetrieben ist. Der Kompressor 2 weist einen Ausgang 3 und einen Eingang 4 auf. Während er an dem Eingang 4 gasförmiges Fluid ansaugt, gibt er an dem Ausgang 3 verdichtetes Fluid ab. Von dem Ausgang 3 führt eine Druckleitung 5 zu einem Kühler 6, in dem das verdichtete Wärmeträgerfluid (z.B. CO₂ Propan, Butan, R134a oder Ammoniak) abkühlt und/oder kondensiert. Das abgekühlte und unter hohem Druck (z.B. zwischen 100 bar und 150 bar bei CO₂) stehende Wärmeträgerfluid wird an einem Ausgang 7 des Kühlers 6 an eine weitere Druckleitung 8 abgegeben, die zu einem Hochdruckeingang 9 eines Wärmetauschers 11 führt. Dieser weist einen Hochdruckausgang 12 auf, an den über eine Druckleitung 14 ein Expansionsventil 15 angeschlossen ist. Dieses bewirkt eine Entspannung des Wärmeträgerfluids, das in einen Verdampfer 16 eingeleitet wird. Hier verdampft es unter Aufnahme von Umgebungswärme, bspw. zur Abkühlung von Luft in einer Klimaanlage. Aus dem Verdampfer 16 wird der entstehende kalte Dampf des Wärmeträgerfluids über eine Niederdruckleitung 17 zu einem Niederdruckeingang 18 des Wärmetauschers 11 geführt. Es durchströmt diesen im Gegenstrom zu dem über den Hochdruckeingang 9 zugeführten Fluid. Dabei tritt es in Wärmeaustausch mit diesem und wird an einem Niederdruckausgang 19 erwärmt abgegeben. Von diesem wird es über eine Niederdruckleitung 21 dem Eingang 4 des Kompressors 2 zugeführt.

Der Wärmetauscher 11 ist in Figur 2 gesondert veranschaulicht. Er weist ein Wärmetauscherrohr 22 auf, das individuell gestaltet sein kann und im vorliegenden Ausführungsbeispiel U-förmig gebogen ist. Es weist zwei gerade, im Abstand parallel zueinander verlaufende Schenkel 23, 24 auf, die untereinander durch einen bogenförmigen Abschnitt 25 verbunden sind. Die Enden der beiden Schenkel 23, 24 sind jeweils voneinander weg gebogen und zueinander fluchtend, d.h. koaxial zu einer gemeinsamen Achse 26 angeordnet.

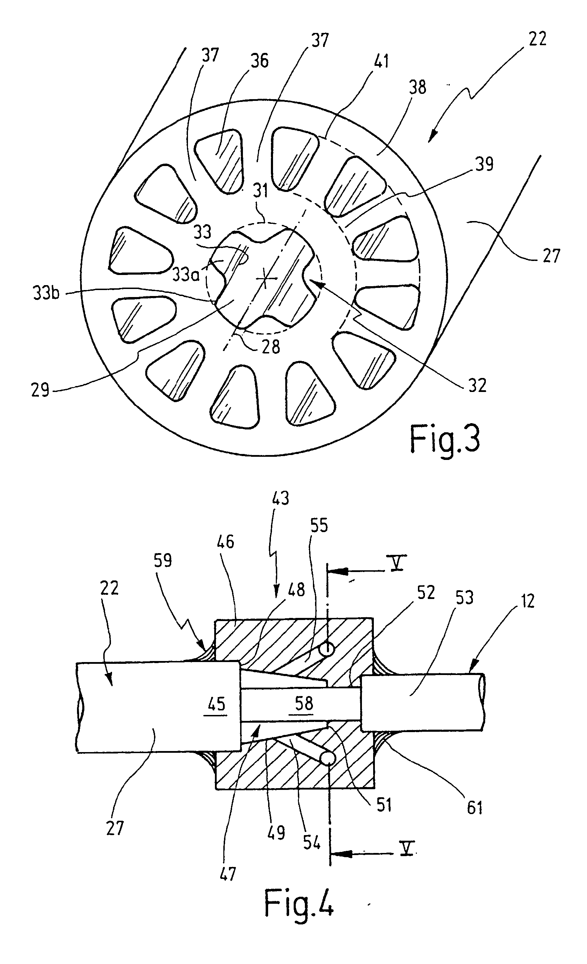

Das Wärmetauscherrohr 22 ist ein im Strangpressverfahren hergestelltes mehrkammeriges Aluminiumprofil. Es ist in Figur 3 zu Veranschaulichung seines Querschnitts gesondert dargestellt. Das Wärmetauscherrohr 22 weist eine vorzugsweise zylindrische äußere Mantelfläche 27 auf, die koaxial zu einer Längsmittelachse 28 angeordnet ist. Ebenfalls koaxial zu der Längsmittelachse 28 ist ein Zentralkanal 29 vorgesehen, der einen von der Kreisform abweichenden Querschnitt aufweist. Im vorliegenden Ausführungsbeispiel, d.h. bei einer Klimaanlage mit CO₂ als Kältemittel (Wärmeträgerfluid), wird ein Außendurchmesser des Zentralkanals 29 von 5mm bis 6mm als zweckmäßig angesehen. Dieser Durchmesser ist in Figur 3 durch eine gestrichelte Linie 31 angedeutet. Von diesem Durchmesser ausgehend ist der Zentralkanal 29 durch im Ausführungsbeispiel vier Vorsprünge 32 verengt, die einander paarweise gegenüberliegend angeordnet sind. Bedarfsweise können jedoch auch mehr (z.B. fünf oder sechs) oder weniger (z.B. lediglich zwei oder drei) Vorsprünge 32 vorgesehen sein.

Die Vorsprünge 32 bilden Längsrippen 33, die sich parallel zu der Längsmittelachse 28 erstrecken. Die zu der Längsmittelachse 28 hinweisenden Enden der Rippen 33 sind gerundet, wobei der Rundungsradius etwa in der Größenordnung der Höhe jeder Rippe (gemessen von der gestrichelten Linie 31) liegt. Ist der Radius etwas kleiner, haben die Längsrippen 33 jeweils einen etwa dreieckigen Querschnitt mit einem vorzugsweise rechten Winkel zwischen den beiden die Rippe 33 begrenzenden Flanken 33a, 33b. Sind die Flanken 33a, 33b nicht eben sondern gerundet, ist der Winkel zwischen an die Flanken 33a, 33b gelegten Tangenten etwa 90°.

Das Wärmetauscherrohr 22 ist einstückig ausgebildet und weist mehrere Außenkanäle 36 auf. In der Ausführungsform nach Figur 3 sind die Außenkanäle 36 untereinander gleich ausgebildet. Es sind wenigstens sieben, vorzugsweise aber mehr Außenkanäle 36 vorgesehen. Bevorzugt werden zwölf Außenkanäle mit, wie aus Figur 3 ersichtlich, etwa keilförmigem Querschnitt. Die Außenkanäle 36 sind untereinander durch Zwischenwände 37 getrennt, wobei der Winkel zwischen zwei Zwischenwänden 37 etwa 30° beträgt. Die Zwischenwände 37 erstrecken sich etwa parallel zu der Längsmittelachse 28 sowie radial zu dieser. Sie weisen eine sowohl in Längsrichtung als auch in Radialrichtung gleichbleibende Wandstärke auf. Diese beträgt im vorliegenden Ausführungsbeispiel etwa 1mm bis 1,5mm und ist kleiner als die mittlere Breite eines Außenkanals 36. Nach außen hin sind die Außenkanäle 36 durch einen Wandabschnitt 38 geschlossen, dessen Dicke etwa mit der Dicke einer Zwischenwand 37 übereinstimmt und etwa 1mm beträgt.

Die Außenkanäle 36 sind äquidistant zueinander und auf einem zu der Längsmittelachse 28 koaxialen Kreis angeordnet. Ihr radial inneres Ende ist von der Linie 31 um ein Maß beabstandet, das größer ist, als die Dicke einer Zwischenwand. Im vorliegenden Fall beträgt der Abstand etwa 1,5mm. Dadurch wird eine ausreichende Wandstärke zwischen dem Zentralkanal 29 und den Außenkanälen 36 geschaffen, um eine hohe Druckfestigkeit des Zentralkanal 29 sicherzustellen.

Während der Zentralkanal 29 etwa stern- oder kreuzförmig ausgebildet ist, sind die Außenkanäle 36 etwa keilförmig ausgebildet, wobei alle Kanäle 29, 36 jeweils gerundete Kanten aufweisen. Der Zentralkanal 29 berührt mit seinen Wandabschnitten, die den größten Durchmesser aufweisen, den durch die Linie 31 bezeichneten Kreis, während die Außenkanäle 36 mit ihren inneren Wandungsabschnitten einen durch die Linie 39 und mit ihren äußeren Wandungsabschnitten einen durch die Linie 41 bezeichneten Kreis berühren.

Das Wärmetauscherrohr 22 ist wesentlicher Bestandteil des druckfesten Wärmetauschers 11. Zu diesem gehören, wie aus Figur 2 ersichtlich, außerdem Anschlussstücke 42, 43, die an den beiden Enden 44, 45 des Wärmetauscherrohrs 22 befestigt sind und an denen der Hochdruckeingang 9, der Hochdruckausgang 12, der Niederdruckeingang 18 und der Niederdruckausgang 19 angeordnet sind. Die beiden Anschlussstücke 42, 43 sind untereinander vorzugsweise gleich ausgebildet. Die nachfolgende Beschreibung des Anschlussstücks 43 gilt somit entsprechend für das Anschlussstück 42.

Wie aus Figur 4 ersichtlich, weist das Anschlussstück 43 einen etwa zylindrischen Grundkörper 46 auf, der zur Aufnahme des Endes 45 des Wärmetauscherrohrs 22 mit einer Öffnung 47 versehen ist. Die Öffnung 47 ist zunächst zylindrisch ausgebildet, mit einem Durchmesser der etwa mit dem Durchmesser der Mantelfläche 27 des Wärmetauscherrohrs 22 übereinstimmt oder geringfügig größer ist als dieser. Dieser zylindrische Abschnitt der Öffnung 47 geht bei einer Ringschulter 48 in einen konischen Abschnitt 49 über, in dem sich der Durchmesser der Öffnung 47 von dem Ende 45 weg verringert. An einer Übergangsstelle 51 geht die Öffnung 47 wiederum in einen zylindrischen Abschnitt 52 über. Zur Aufnahme eines entsprechenden, bspw. den Hochdruckausgang 12 bildenden Anschlussstücks 53, erweitert sich der zylindrische Abschnitt 52 dann nochmals auf einen etwas größeren Durchmesser.

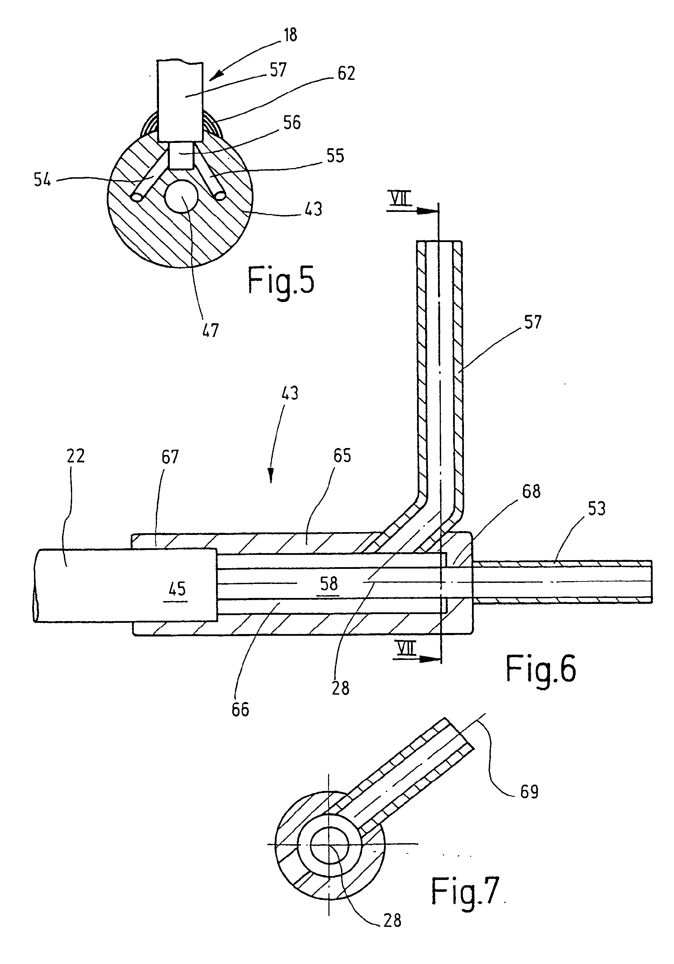

Die Öffnung 47 bildet mit ihrem konischen Abschnitt 49 eine Sammelkammer, in die ein oder mehrere, im vorliegenden Ausführungsbeispiel zwei einander diametral gegenüberliegende Kanäle 54, 55 münden. Wie insbesondere aus Figur 5 ersichtlich, liegen diese Kanäle 54, 55 einander gegenüber und münden an der konischen Wandung der Öffnung 47. Die Kanäle 54, 55 führen in einer radial angeordneten Seitenkammer 56 zusammen, an die ein z.B. dem Niederdruckeingang 18 bildendes rohrförmiges Anschlussstück 57 angeschlossen ist.

Zum Anschluss des Endes 45 des Wärmetauscherrohrs 22 sind von einem kurzen Abschnitt seines Endes 45 der äußere Wandabschnitt 38 sowie die Zwischenwände 37 entfernt, so dass lediglich ein rohrförmiges, den Zentralkanal 29 umgebendes Stück 58 übrigbleibt. Dieses durchquert die Öffnung 47 und ragt in den Abschnitt 52 der Öffnung 47, wenn das Ende 45 in die Öffnung 47 eingesetzt ist. Dies ist in Figur 4 veranschaulicht. Außerdem ist aus Figur 4 ersichtlich, dass das Wärmetauscherrohr 22 mit dem Anschlussstück 43 bei einer entsprechenden Schweißnaht 59 verschweißt ist. Ebenso ist das Anschlussstück 53 mit dem Anschlussstück 43 über eine Schweißnaht 61 verschweißt. Das Anschlussstück 57 ist mit dem Anschlussstück 43, wie aus Figur 5 hervorgeht, über eine Schweißnaht 62 verschweißt.

Anstelle einer Schweißverbindung kann auch eine Lötverbindung oder bei ausreichender Dimensionierung eine Klebeverbindung vorgesehen werden. Das Stück 58 kann im Presssitz in dem Abschnitt 52 des Anschlussstücks 43 sitzen. Auf eine absolut fluiddichte Abdichtung kommt es auch hier an, weil auch geringfügigste Leckagen zwischen dem Zentralkanal 29 und den Außenkanälen 36 nicht zulässig sind. Falls dies nicht ausreicht, kann hier eine Löt- oder Schweißverbindung oder alternativ eine Klebeverbindung oder Pressverbindung vorgesehen werden und/oder ein Dichtungsmittel wie bspw. ein O-Ring eingesetzt werden.

Die insoweit beschriebene Kältemaschine 1 arbeitet wie folgt:

In Betrieb verdichtet der Kompressor 2 aus dem Verdampfer 16 abgesaugten Dampf. Dieser wird über die Niederdruckleitung 17 dem Wärmetauscher 11 zugeführt. Hier gelangt er über den Niederdruckeingang 18 zunächst in die Kanäle 54, 55 zu gleichen Teilen. Diese führen den Dampf, der von der Öffnung 47 festgelegten konischen Kammer auf zwei einander diametral gegenüberliegenden Seiten zu, so dass diese gleichmäßig gefüllt wird. Der in die Kammer eingeführte Dampf kann sich somit gleichmäßig und mit gleichem Druck auf alle zwölf Außenkanäle 36 verteilen und den Wärmetauscher 11 durchströmen. An dem gegenüberliegenden Anschlussstück 42 tritt der in dem Wärmetauscher 11 erwärmte Dampf aus den Außenkanälen 36 aus und in eine entsprechende konische Kammer ein. Von dieser wird der erwärmte Dampf durch die beiden Kanäle 54, 55 wiederum dem Niederdruckausgang 19 zugeführt. Von hier aus gelangt der etwas erwärmte Dampf zu dem Kompressor 22. Nach Kompression und Abkühlung des Kältemittels wird dieses wiederum dem Hochdruckeingang 9 zugeführt. Dieser ist koaxial zu dem Zentralkanal 29 angeordnet. Das Kältemittel wird dem Zentralkanal somit unmittelbar zugeführt und zwar im Gegenstrom zu den Außenkanälen 36. Das den Zentralkanal 29 durchströmende Wärmeträgerfluid gibt hier einen Teil seiner noch vorhandenen Wärme an das Wärmetauscherrohr 22 ab, das die Wärme auf das im Gegenstrom durch die Außenkanäle 36 strömende kältere Fluid überträgt.

Der beschriebene Wärmetauscher 11 ist kostengünstig herstellbar und bei geringem Materialeinsatz und Gewicht in hohem Maße druckfest und effektiv. Er eignet sich somit auf besonders gute Weise zum Einsatz in Kraftfahrzeugen.

Die Anschlussstücke 42, 43 haben jeweils die Aufgabe, die im Wesentlichen radial angeordneten Niederdruckanschlüsse (Niederdruckeingang 18, Niederdruckausgang 19) mit den Außenkanälen 36 so in Verbindung zu bringen, dass sich das ein- bzw. ausströmende Fluid gleichmäßig auf die Außenkanäle 36 verteilt. Außerdem müssen die im Wesentlichen axialen Anschlüsse (Hochdruckeingang 9, Hochdruckausgang 12) an den Zentralkanal 29 angeschlossen werden. Dazu ist auch das in Figur 6 stellvertretend für beide Anschlussstücke 42, 43 veranschaulichte Anschlussstück 43 geeignet. Es weist einen zylindrischen Grundkörper 65 auf, der eine zylindrische Kammer 66 umschließt. Diese weist an einem Ende eine Öffnung 67 mit vergrößertem Durchmesser und an dem gegenüberliegenden Ende eine Öffnung 68 mit kleinerem Durchmesser auf. Das Ende 45 des Wärmetauscherrohrs 22 ragt in die Öffnung 67 und ist in diesem abgedichtet fixiert. Dazu können Löt- oder Schweißverbindungen, Klebeverbindungen oder Presssitzverbindungen, unterstützt durch Dichtungsmittel wie bspw. O-Ringe, dienen.

Das Stück 58 des Wärmetauscherrohrs 22 erstreckt sich durch die Kammer 66 hindurch bis in die Öffnung 68. In dieser ist es abgedichtet gehalten, bspw. durch Löt-, Schweiß- oder Klebeverbindung oder im Presssitz. Im Anschluss an die Öffnung 68 ist außerdem das rohrförmige Anschlussstück 53 angeordnet.

Während bei dem Ausführungsbeispiel der Anschlussstücke 42, 43 nach Figur 4 und 5 als mit zur gleichmäßigen Aufteilung des Wärmeträgerfluids auf die Außenkanäle 36 eine konische Kammer mit wenigstens zwei einander gegenüberliegenden Zuflüssen oder Abflüssen (Kanäle 54, 55) vorgesehen worden ist, dient bei der Ausführungsform nach den Figur 6 und 7 zur Vergleichmäßigung der Verteilung des Fluids eine Dreh- oder Wirbelbewegung des in der Kammer 6b befindlichen Fluids. Um diese zu induzieren, ist das rohrförmige Anschlussstück 57 so an die Kammer 66 angeschlossen, dass seine Rohrmittelachse 69 die Längsmittelachse 28 des Anschlussstücks 43 und des Wärmetauscherrohrs 22 nicht trifft. Der Abstand zwischen der Rohrmittelachse 69 und der Längsmittelachse 28 ist dabei aber kleiner als der Außendurchmesser des Stücks 58, um keine zu starke Wirbelbildung hervorzurufen. Außerdem ist das Anschlussstück 57 im Bereich seiner Mündung in die Kammer 66 etwas gegen die Radialrichtung geneigt; im Ausführungsbeispiel nach Figur 6 etwa um 40° bis 50°.

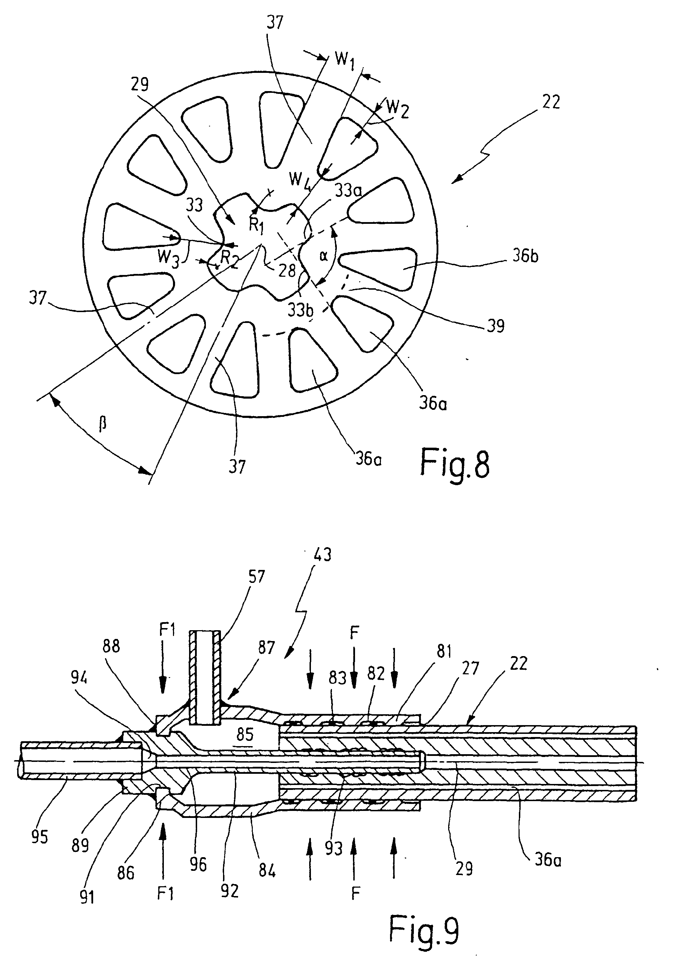

Eine abgewandelte Ausführungsform des Wärmetauscherrohrs 22 ist in Figur 8 veranschaulicht. Wie bei dem vorstehend beschriebenen Ausführungsbeispiel schließen die Flanken 33a, 33b einen Winkel α von etwa 90° miteinander ein. Die Längsrippen 33 sind an ihrer der Längsmittelachse 28 zugewandten Seite mit einem Radius R1 gerundet, der etwa in der Größenordnung der Höhe jeder Längsrippe 33 liegt oder etwas größer als diese ist. Ebenso sind die Übergänge zwischen den Längsrippen 33 und den übrigen Bereichen der Wandung des Zentralkanals 29 mit einem Radius R2 gerundet, der jedoch vorzugsweise deutlich kleiner ist als der Radius R1. Der Winkel β zwischen benachbarten Zwischenwänden 37 beträgt einheitlich 30° und die Wandungsstärke wie eins der Zwischenwände 37 ist etwas größer (1,2mm) als die Wandungsstärke W2 der Außenwand (1mm).

Abweichend von dem vorstehend beschriebenen Ausführungsbeispiel ist jedoch der Querschnitt der Außenkanäle 36 nicht vollständig einheitlich. Acht Außenkanäle 36a erstrecken sich bis zu dem durch die gestrichelte Linie 39 markierten Kreis, der konzentrisch zu der Längsmittelachse 28 angeordnet ist. Vier jeweils im Bereich einer Längsrippe 33 angeordnete Außenkanäle 36b erstrecken sich jedoch über diesen Kreis hinaus weiter nach innen. In diesem Bereich W3 wird eine Wandstärke erzielt, der etwa der Wandstärke W4 zwischen dem Zentralkanal 28 und den kleineren Außenkanälen 36a erreicht wird.

In den Figuren 4 bis 7 ist der Anschluss des Wärmetauscherrohrs 22 schematisch veranschaulicht. Eine besonders vorteilhafte Ausführungsform des Wärmetauscherrohranschlusses ist dagegen in Fig. 9 veranschaulicht. Das Wärmetauscherrohr 22 ist mit seinem Ende 45 in einem rohrförmigen Fortsatz 81 des Anschlussstücks 43 gefasst, der abgedichtet auf der Mantelfläche 27 des Wärmetauscherrohrs sitzt. Zur mechanischen Sicherung dient eine Pressverbindung, die durch radiale Kompression des Fortsatzes 81 erreicht wird. Diese ist in Fig. 9 durch Pfeile F angedeutet.

In dem Fortsatz 81 sind ein oder mehrere Ringnuten 82 ausgebildet, die zur Aufnahme von jeweils vorzugsweise einem elastomeren O-Ring 83 dienen, der als Dichtungselement dient. O-Ringe werden wegen ihrer Elastizität als vorteilhaft angesehen (Vibrationsfestigkeit). Als Dichtungselemente kommen jedoch auch andere Elemente, wie z.B. Schneidringe in Frage, die sich in den Fortsatz 81 und in die Mantelfläche 27 einschneiden und eine rein metallische Abdichtung erbringen (Unempfindlichkeit gegen Fluide). Es ist auch möglich, Schneidringen und O-Ringe miteinander zu kombinieren, z.B. indem eine Ringnut 82 einen elastomeren O-Ring enthält und eine andere Ringnut mit einem metallischen Schneidring enthält.

An den Fortsatz 81 schließt sich ein Abschnitt 84 mit geringfügig vergrößertem Durchmesser bzw. nicht durch Radialkompression reduziertem Durchmesser an. Dieser Abschnitt umschließt eine Ein- oder Ausströmkammer 85 und ist endseitig durch eine Stirnwand 86 geschlossen. Die Wandung der Kammer 85 ist seitlich mit einer Öffnung 87 durchbrochen, in die das Anschlussrohr 57 eingelötet oder eingeschweißt ist.

Die Stirnwand 86 ist ebenfalls mit einer Öffnung 88 versehen, in der ein Anschlusssockel 89 sitzt. Dieser weist einen zylindrischen Grundkörper auf, dessen Mantelfläche mit einer Ringnut 91 versehen ist. Die Stirnwand 86 greift mit der Berandung ihrer Öffnung 88 in die Ringnut. Dies wird erreicht, indem die Öffnung 88 zunächst mit einem Durchmesser hergestellt wird, der größer ist als der Durchmesser des Grundkörpers. In einem Radialkompressionsschritt wird die Öffnung 88 dann verkleinert, indem eine Kraft in Richtung der Pfeile F1 aufgeprägt wird. Zur Abdichtung und zusätzlichen Sicherung wird die Stirnwand 86 dann mit dem Anschlusssockel 89 verschweißt oder anderweitig stoffschlüssig verbunden.

Von dem Anschlusssockel 89 erstreckt sich eine Kanüle 92 (rohrförmiger Fortsatz) in den Zentralkanal 29 hinein. Dazu sind zumindest in dem Bereich, über den sich die Kanüle 92 in den Zentralkanal 29 erstreck, die Rippen 33 entfernt - der Zentralkanal 29 ist hier zylindrisch. Die Kanüle 92 ist an ihrer Außenseite mit ringförmigen Metallrippen 93 versehen, die als Dichtungselemente dienen. Beim radialen Verpressen (Kräfte F) drücken sich diese Metallrippen in die Wandung des Zentralkanals und bewirken eine metallische Abdichtung. Die Metallrippen 93 können einstückig mit der Kanüle 92 ausgebildet sein. Alternativ können auch O-Ringe oder anderweitige Dichtungselemente vorgesehen werden.

Der Anschlusssockel 89 weist zum Anschluss des Zentralkanals 29 eine Anschlussöffnung 94 auf, die mit dem von der Kanüle 92 umschlossenen Kanal kommuniziert, dabei aber einen größeren Durchmesser aufweist. In diese Anschlussöffnung ist ein Rohrende 95 eingesteckt und mit dem Anschlusssockel 89 verschweißt oder alternativ anderweitig verbunden.

Der Anschlusssockel 89 bildet mit dem äußeren Rohrteil (Abschnitt 84 und Fortsatz 81) ein zweiteiliges Anschlussstück. Der Anschlusssockel 89 weist in der Kammer 85 im Übergang zu der Kanüle 92 eine konkav geformte ringförmige Leitfläche 96 auf, die eine Strömung aus der Radialrichtung in die Axialrichtung (oder umgekehrt) umleitet. Diese Leitfläche reduziert Strömungsverluste und bewirkt in Verbindung mit der ringförmigen Kammer 85, deren Länge etwa so groß ist wie deren Durchmesser, eine gleichmäßige Verteilung der Strömung auf die Kanäle 36a oder eine gleichmäßige Fluidabnahme von diesen Kanälen 36a.

Eine Klimaanlage für ein Kraftfahrzeug enthält einen Wärmetauscher 11 mit einem Wärmetauscherrohr 22, das einen profilierten Zentralkanal 29 und um diesen herum gruppierte Außenkanäle 36 aufweist. Dieses Wärmetauscherrohr 22 ist zum Aufbau von Gegenstromwärmetauschern geeignet. Das Wärmetauscherrohr 22 ist dazu auf entsprechende Länge abzuschneiden und mit entsprechenden Endstücken 42, 43 zu versehen. Derartige Wärmetauscher erweisen sich als leicht, druckfest und effektiv.

## Patentansprüche

1. Wärmetauscher (11) mit einem Wärmetauscherrohr (22),
mit einem Zentralkanal (29), der eine geschlossene Wandung aufweist, von der sich mehrere Vorsprünge (31) in den Zentralkanal (29) hinein erstrecken,
mit mehreren Außenkanälen (36), die konzentrisch zu dem Zentralkanal (29) angeordnet und voneinander durch Zwischenwände (37) getrennt sind
**dadurch gekennzeichnet,**
**dass** das Wärmetauscherrohr (22) an beiden Enden (44, 45) mit Anschlussstücken (42, 43) verbunden ist, die jeweils einen Sammelraum (47, 66) aufweisen, um alle Außenkanäle (36) zu einem Kanal zusammenzufassen und
**dass** die Anschlussstücke (42, 43) Mittel zur gleichmäßigen Aufteilung einer Fluidströmung auf die Außenkanäle (36) bzw. zur gleichmäßigen Zusammenfassung der aus den Außenkanälen (36) ankommenden Fluidströmung aufweisen.

2. Wärmetauscher nach Anspruch 1, **dadurch gekennzeichnet, dass** die Anzahl der Zwischenwände (37) des Wärmetauscherrohrs (22) größer ist als die Anzahl der Vorsprünge (31).

3. Wärmetauscher nach Anspruch 1, **dadurch gekennzeichnet, dass** die Außenkanäle (36) des Wärmetauscherrohrs (22) an ihrer radial inneren Seite jeweils eine Breite aufweisen, die geringer ist als ihre in Radialrichtung gemessene Höhe.

4. Wärmetauscher nach Anspruch 1, **dadurch gekennzeichnet, dass** die Außenkanäle (36) des Wärmetauscherrohrs (22) an ihrer radial äußeren Seite jeweils eine Breite aufweisen, die geringer ist als ihre in Radialrichtung gemessene Höhe.

5. Wärmetauscher nach Anspruch 1, **dadurch gekennzeichnet, dass** die Zwischenwände (37) des Wärmetauscherrohrs (22) parallelflankig ausgebildet sind.

6. Wärmetauscher nach Anspruch 1, **dadurch gekennzeichnet, dass** alle Außenkanäle (36) des Wärmetauscherrohrs (22) übereinstimmende Querschnitte aufweisen.

7. Wärmetauscher nach Anspruch 1, **dadurch gekennzeichnet, dass** die Außenkanäle (36a, 36b) des Wärmetauscherrohrs (22) wenigstens zwei unterschiedliche Querschnitte aufweisen.

8. Wärmetauscher nach Anspruch 1, **dadurch gekennzeichnet, dass** alle Zwischenwände (37) des Wärmetauscherrohrs (22) eine einheitliche Wandstärke aufweisen.

9. Wärmetauscher nach Anspruch 1, **dadurch gekennzeichnet, dass** zwischen dem Zentralkanal (29) des Wärmetauscherrohrs (22) und den Außenkanälen (36) eine Wandstärke vorgesehen ist, die größer ist als die Wandstärke der Zwischenwände (37).

10. Wärmetauscher nach Anspruch 1, **dadurch gekennzeichnet, dass** zwischen dem Zentralkanal (29) des Wärmetauscherrohrs (22) und den Außenkanälen (36) des Wärmetauscherrohrs (22) eine Wandstärke vorgesehen ist, die größer ist als die Wandstärke von Wandbereichen (38), die die Außenkanäle (36) nach außen abschließen.

11. Wärmetauscher nach Anspruch 1, **dadurch gekennzeichnet, dass** die Außenkanäle (36) des Wärmetauscherrohrs (22) einen keilförmigen Querschnitt aufweisen.

12. Wärmetauscher nach Anspruch 1, **dadurch gekennzeichnet, dass** der Zentralkanal (29) des Wärmetauscherrohrs (22) einen kreuzförmigen Querschnitt aufweist.

13. Wärmetauscher nach Anspruch 1, **dadurch gekennzeichnet, dass** die Vorsprünge (31) des Wärmetauscherrohrs (22) einen dreieckigen gerundeten Querschnitt aufweisen.

14. Wärmetauscher nach Anspruch 1, **dadurch gekennzeichnet, dass** die Vorsprünge (31) des Wärmetauscherrohrs (22) Flanken aufweisen, die miteinander einen rechten Winkel (α) einschließen.

15. Wärmetauscher nach Anspruch 1, **dadurch gekennzeichnet, dass** die Vorsprünge (31) des Wärmetauscherrohrs (22) als Rippen (33) ausgebildet sind.

16. Wärmetauscher nach Anspruch 15, **dadurch gekennzeichnet, dass** die Rippen (33) des Wärmetauscherrohrs (22) in Axialrichtung gerade ausgebildet sind.

17. Wärmetauscher nach Anspruch 1, **dadurch gekennzeichnet, dass** das Wärmetauscherrohr (22) als Aluminium-Strangpressprofil ausgebildet ist.

18. Wärmetauscher nach Anspruch 1, **dadurch gekennzeichnet, dass** das Mittel zur gleichmäßigen Aufteilung bzw. Zusammenfassung der Fluidströmung eine Diffusorkammer (47) ist.

19. Wärmetauscher nach Anspruch 1, **dadurch gekennzeichnet, dass** das Mittel zur gleichmäßigung Aufteilung bzw. Zusammenfassung der Fluidströmung eine Drallkammer (66) ist.

20. Wärmetauscher nach Anspruch 19, **dadurch gekennzeichnet, dass** die Diffusorkammer konisch ausgebildet ist und wenigstens zwei Zu- bzw. Abströmkanäle (54, 55) aufweist.

21. Wärmetauscher nach Anspruch 19, **dadurch gekennzeichnet, dass** die Drallkammer (66) einen im Wesentlichen zylindrischen Querschnitt aufweist.

22. Wärmetauscher nach Anspruch 19, **dadurch gekennzeichnet, dass** die Drallkammer einen gegen die Radialrichtung parallel versetzten und geneigten Zu- bzw. Abströmanschluss (57) aufweist.

23. Wärmetauscher nach Anspruch 1, **dadurch gekennzeichnet, dass** die Anschlussstücke (42, 43) an beiden Enden (44, 45) des Wärmetauscherrohrs untereinander gleich ausgebildet sind.

24. Klimaanlage (1), insbesondere für Kraftfahrzeuge,
mit einem Kompressor (2) zur Bereitstellung komprimierten Fluids an einem Ausgang (3),
mit einem Kühler (6) zur Abkühlung des komprimierten Fluids, der über eine Leitung (5) an den Kompressor (2) angeschlossen ist,
mit einem Expansionsventil (15), das über eine Hochdruckleitung (14)von dem Kondensator (6) abgekühltes Fluid erhält und an einen Verdampfer (16) abgibt,
mit einer Rückführungsleitung (17, 21), über die Fluid aus dem Verdampfer (16) an den Kompressor (2) zurückgeleitet wird, und
mit einem Wärmetauscher (11) nach einem der Ansprüche 1 bis 23, dessen Zentralkanal (29) an die Hochdruckleitung (8, 14) angeschlossen ist und dessen Außenkanäle (36) an die Rückführungsleitung (17, 21) angeschlossen sind.

## Claims

1. Heat exchanger (11) with a heat exchanger tube (22),
with a central channel (29) having a closed wall from which several protrusions (31) extend into the central channel (29),
with a plurality of outer channels (36) disposed concentric to the central channel (29) and separated from each other by intermediate walls (37),
**characterised in that**
the heat exchanger tube (22) at both ends (44, 45) is connected to connector pieces (42, 43) which each have a collecting chamber (47, 66) in order to merge all outer channels (36) into one channel, and
that the connection pieces (42, 43) respectively have means for even division of a fluid flow to the outer channels (36) and for even merging of the fluid flow coming from the outer channels (36).

2. Heat exchanger according to claim 1, **characterised in that** the number of intermediate walls (37) of the heat exchanger tube (22) is greater than the number of protrusions (31).

3. Heat exchanger according to claim 1, **characterised in that** the outer channels (36) of the heat exchanger tube (22) on their radial inner side each have a width which is less than their height measured in the radial direction.

4. Heat exchanger according to claim 1, **characterised in that** the outer channels (36) of the heat exchanger tube (22) on their radial outer side each have a width which is less than the height measured in the radial direction.

5. Heat exchanger according to claim 1, **characterised in that** the intermediate walls (37) of the heat exchanger tube (22) are formed with parallel sides.

6. Heat exchanger according to claim 1, **characterised in that** all outer channels (36) of the heat exchanger tube (22) have matching cross-sections.

7. Heat exchanger according to claim 1, **characterised in that** the outer channels (36a, 36b) of the heat exchanger tube (22) have at least two different cross-sections.

8. Heat exchanger according to claim 1, **characterised in that** all intermediate walls (37) of the heat exchanger tube (22) have a uniform wall thickness.

9. Heat exchanger according to claim 1, **characterised in that** between the central channel (29) of the heat exchanger tube (22) and the outer channels (36) is provided a wall thickness that is greater than the wall thickness of the intermediate walls (37).

10. Heat exchanger according to claim 1, **characterised in that** between the central channel (29) of the heat exchanger tube (22) and the outer channels (36) of the heat exchanger tube (22) is provided a wall thickness which is greater than the wall thickness of wall areas (38) which close the outer channels (36) on the outside.

11. Heat exchanger according to claim 1, **characterised in that** the outer channels (36) of the heat exchanger tube (22) have a wedge-shaped cross-section.

12. Heat exchanger according to claim 1, **characterised in that** the central channel (29) of the heat exchanger tube (22) has a cruciform cross-section.

13. Heat exchanger according to claim 1, **characterised in that** the protrusions (31) of the heat exchanger tube (22) have a triangular rounded cross-section.

14. Heat exchanger according to claim 1, **characterised in that** the protrusions (31) of the heat exchanger tube (22) have sides which enclose a right angle (α) with each other.

15. Heat exchanger according to claim 1, **characterised in that** the protrusions (31) of the heat exchanger tube (22) are formed as ribs (33).

16. Heat exchanger according to claim 15, **characterised in that** the ribs (33) of the heat exchanger tube (22) are formed straight in the axial direction.

17. Heat exchanger according to claim 1, **characterised in that** the heat exchanger tube (22) is formed as an aluminium extruded profile.

18. Heat exchanger according to claim 1, **characterised in that** the means for even division or merging of the fluid flow is a diffuser chamber (47).

19. Heat exchanger according to claim 1, **characterised in that** the means for even division or merging of the fluid flows is a swirl chamber (66).

20. Heat exchanger according to claim 19, **characterised in that** the diffuser chamber is formed conical and has at least two supply and discharge channels (54, 55).

21. Heat exchanger according to claim 19, **characterised in that** the swirl chamber (66) has a substantially cylindrical cross-section.

22. Heat exchanger according to claim 19, **characterised in that** the swirl chamber has a supply or discharge connection (57) offset parallel to the radial direction and angled.

23. Heat exchanger according to claim 1, **characterised in that** the connection pieces (42, 43) are formed the same at both ends (44, 45) of the heat exchanger tube.

24. Air conditioning system (1) in particular for motor vehicles,
with a compressor (2) to provide compressed fluids to an outlet (3),
with a cooler (6) for cooling the compressed fluid that is connected via a line (5) to the compressor (2),
with an expansion valve (15) which via a high pressure line (14) receives cooled fluid from the condenser (6) and passes this to an evaporator (16),
with a return line (17, 21) via which fluid is returned from the evaporator (16) to the compressor (2), and
with a heat exchanger (11) according to any of claims 1 to 23, the central channel (29) of which is connected to the high pressure line (8, 14) and the outer channels (36) of which are connected to the return line (17, 21).

## Revendications

1. Echangeur de chaleur (11) comportant un tube d'échangeur de chaleur (22) comprenant :
un canal central (29) qui présente une paroi fermée depuis laquelle s'étendent plusieurs saillies (31) jusque dans le canal central (29) ;
plusieurs canaux extérieurs (36) qui sont agencés concentriquement au canal central (29) et qui sont séparés l'un de l'autre par des cloisons intermédiaires (37),
**caractérisé en ce que** :
le tube d'échangeur de chaleur (22) est relié aux deux extrémités (44, 45) par des pièces de raccordement (42, 43) qui présentent respectivement un compartiment collecteur (47, 66) afin de regrouper respectivement tous les canaux extérieurs (36) en un canal, et
les pièces de raccordement (42, 43) présentent un moyen pour la répartition régulière d'un flux de fluide sur les canaux extérieurs (36) ou pour le regroupement régulier du flux de fluide qui arrive des canaux extérieurs (36).

2. Echangeur de chaleur selon la revendication 1, **caractérisé en ce que** le nombre de cloisons intermédiaires (37) du tube d'échangeur de chaleur (22) est plus grand que le nombre de saillies (31).

3. Echangeur de chaleur selon la revendication 1, **caractérisé en ce que** les canaux extérieurs (36) du tube d'échangeur de chaleur (22) présentent respectivement sur leur côté radialement intérieur une largeur qui est plus faible que leur hauteur mesurée en direction radiale.

4. Echangeur de chaleur selon la revendication 1, **caractérisé en ce que** les canaux extérieurs (36) du tube d'échangeur de chaleur (22) présentent respectivement sur leur côté radialement extérieur une largeur qui est plus faible que leur hauteur mesurée en direction radiale.

5. Echangeur de chaleur selon la revendication 1, **caractérisé en ce que** les cloisons intermédiaires (37) du tube d'échangeur de chaleur (22) sont réalisées avec des flancs parallèles.

6. Echangeur de chaleur selon la revendication 1, **caractérisé en ce que** tous les canaux extérieurs (36) du tube d'échangeur de chaleur (22) présentent des sections transversales qui coïncident.

7. Echangeur de chaleur selon la revendication 1, **caractérisé en ce que** les canaux extérieurs (36a, 36b) du tube d'échangeur de chaleur (22) présentent au moins deux sections transversales différentes.

8. Echangeur de chaleur selon la revendication 1, **caractérisé en ce que** toutes les cloisons intermédiaires (37) du tube d'échangeur de chaleur (22) présentent une épaisseur de cloison uniforme.

9. Echangeur de chaleur selon la revendication 1, **caractérisé en ce qu'**une épaisseur de paroi qui est plus grande que l'épaisseur de cloison des cloisons intermédiaires (37) est prévue entre le canal central (29) du tube d'échangeur de chaleur (22) et les canaux extérieurs (36).

10. Echangeur de chaleur selon la revendication 1, **caractérisé en ce qu'**une épaisseur de paroi qui est plus grande que l'épaisseur de paroi des zones de paroi (38) formant la terminaison des canaux extérieurs (36) vers l'extérieur, est prévue entre le canal central (29) du tube d'échangeur de chaleur (22) et les canaux extérieurs (36) du tube d'échangeur de chaleur (22).

11. Echangeur de chaleur selon la revendication 1, **caractérisé en ce que** les canaux extérieurs (36) du tube d'échangeur de chaleur (22) présentent une section transversale en forme de coin.

12. Echangeur de chaleur selon la revendication 1, **caractérisé en ce que** le canal central (29) du tube d'échangeur de chaleur (22) présente une section transversale en forme de croix.

13. Echangeur de chaleur selon la revendication 1, **caractérisé en ce que** les saillies (31) du tube d'échangeur de chaleur (22) présentent une section transversale triangulaire arrondie.

14. Echangeur de chaleur selon la revendication 1, **caractérisé en ce que** les saillies (31) du tube d'échangeur de chaleur (22) présentent des flancs qui incluent entre eux un angle droit (α).

15. Echangeur de chaleur selon la revendication 1, **caractérisé en ce que** les saillies (31) du tube d'échangeur de chaleur (22) sont réalisées comme nervures (33).

16. Echangeur de chaleur selon la revendication 15, **caractérisé en ce que** les nervures (33) du tube d'échangeur de chaleur (22) sont réalisées en ligne droite en direction axiale.

17. Echangeur de chaleur selon la revendication 1, **caractérisé en ce que** le tube d'échangeur de chaleur (22) est réalisé comme profilé d'aluminium extrudé.

18. Echangeur de chaleur selon la revendication 1, **caractérisé en ce que** le moyen pour la répartition régulière ou pour le regroupement régulier du flux de fluide est une chambre à diffuseur (47).

19. Echangeur de chaleur selon la revendication 1, **caractérisé en ce que** le moyen pour la répartition régulière ou pour le regroupement régulier du flux de fluide est une chambre à giration (66).

20. Echangeur de chaleur selon la revendication 19, **caractérisé en ce que** la chambre à diffuseur est réalisée en forme de cône et présente au moins deux canaux d'arrivée ou d'évacuation (54, 55).

21. Echangeur de chaleur selon la revendication 19, **caractérisé en ce que** la chambre à giration (66) présente une section transversale sensiblement cylindrique.

22. Echangeur de chaleur selon la revendication 19, **caractérisé en ce que** la chambre à giration présente un raccord d'arrivée ou d'évacuation (57) parallèlement décalé et incliné à l'encontre de la direction radiale.

23. Echangeur de chaleur selon la revendication 1, **caractérisé en ce que** les pièces de raccordement (42, 43) sont réalisées de manière identique entre elles aux deux extrémités (44, 45) du tube d'échangeur de chaleur.

24. Installation de climatisation (1), en particulier pour des véhicules automobiles, comprenant :
un compresseur (2) pour la mise à disposition d'un fluide comprimé sur une sortie (3) ;
un radiateur (6) pour le refroidissement du fluide comprimé, lequel est raccordé au compresseur (2) par l'intermédiaire d'une conduite (5) ;
une soupape d'expansion (15) qui, par l'intermédiaire d'une conduite de haute pression (14), reçoit du fluide refroidi depuis le condensateur (6) et redonne ce fluide refroidi à un évaporateur (16) ;
une conduite de retour (17, 21) par laquelle du fluide provenant de l'évaporateur (16) est reconduit vers le compresseur (2) ; et
un échangeur de chaleur (11) selon l'une des revendications 1 à 23, dont le canal central (29) est raccordé est raccordé à la conduite de haute pression (8, 14) et dont les canaux extérieurs (36) sont raccordés à la conduite de retour (17, 21).
